(19) Europäisches Patentamt
European Patent Office
Office européen des brevets

(11)  **EP 2 327 596 B1**

(12)  **EUROPÄISCHE PATENTSCHRIFT**

(45) Veröffentlichungstag und Bekanntmachung des Hinweises auf die Patenterteilung:
**27.04.2016  Patentblatt 2016/17**

(51) Int Cl.:
**B60T 8/175** (2006.01)       **B60T 8/1763** (2006.01)

(21) Anmeldenummer: **10176603.8**

(22) Anmeldetag: **14.09.2010**

(54)  **Reibwertgestützte Begrenzung des Drehmoments eines Fahrzeug-Regelkreises**

Limitation of the torque of a friction coefficient based vehicle control loop

Limitation appuyée par la valeur de friction du couple d'un circuit de réglage d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.11.2009  DE 102009055683**

(43) Veröffentlichungstag der Anmeldung:
**01.06.2011  Patentblatt 2011/22**

(73) Patentinhaber: **Bayerische Motoren Werke Aktiengesellschaft**
**80809 München (DE)**

(72) Erfinder:
• **Bonfigt, Martin**
**82335 Berg (DE)**
• **Pillmeier, Ralf**
**95643 Tirschenreuth (DE)**
• **Moradiellos Rios, Silvia**
**80796 München (DE)**
• **Wachinger, Manfred**
**81373 München (DE)**

(56) Entgegenhaltungen:
WO-A1-03/074337       DE-A1- 4 430 108
DE-A1- 19 933 087     DE-A1-102007 051 590
US-A- 5 325 300

**Beschreibung**

Die Erfindung betrifft zur Stabilisierung eines Fahrzeugs dienende Regelsysteme, beispielsweise Antriebs-Schlupf-Regelsysteme, Anti-Blockier-Systeme, Brems-Assistenten oder Fahrdynamik-Regelsysteme.

Diese Anmeldung fußt auf den Überlegungen in der älteren deutschen Patentanmeldung derselben Anmelderin, welche die Bezeichnung "Vorrichtung zum Einstellen einer Antriebs- und/oder Bremsleistung" trägt und das Aktenzeichen 10 2009 055 683.4 aufweist.

Das Auslösen eines Regelsystems zur Stabilisierung eines Fahrzeugs, beispielsweise eines Antriebs-Schlupf-Regelsystems, erfolgt typischerweise erst bei beginnender Fahrzeuginstabilität, beispielsweise bei Überschreiten einer zulässigen Antriebsschlupfgrenze, d. h. wenn der Antriebsschlupf außerhalb der für Fahrzeugstabilität zulässigen Grenzen ist.

Abhängig von fahrzeugspezifischen Integrationsumgebungen (Komponenten, Hardware, Bordnetz etc.) erfolgt die Reaktion des Regelsystems mit unterschiedlicher zeitlicher Dauer. Unter ungünstigen Randbedingungen kann die Reaktion erst zu einem Zeitpunkt erfolgen, an dem die Regelabweichung bereits weit fortgeschritten ist, was wiederum intensive Eingriffe des Regelsystems zur Folge hat.

Die hohe Intensität der Regeleingriffe führt zu einem erhöhten Belastungsprofil von Bordnetz und Komponenten sowie zu Komforteinbußen in der Fahrerwahrnehmung.

Regelsysteme mit einer reibwertsabhängigen Begrenzung des Drehmoments sind aus der DE 199 33 087 A1, DE 44 30 108 A1 und DE 10 2007 051590 A1 bekannt.

Daher ist es Aufgabe der Erfindung, ein Verfahren und eine entsprechende Vorrichtung anzugeben, welche die hohe Intensität der Regeleingriffe derartiger Regelsysteme und die damit verbundenen Nachteile verringert. Die Aufgabe wird durch die Merkmale der unabhängigen Patentansprüche gelöst.

Ein erster Aspekt der Erfindung ist auf Verfahren zum Begrenzen eines Drehmoments oder einer hierfür charakteristischen Größe eines zur Stabilisierung eines Fahrzeugs dienenden Regelkreises gerichtet. Der Regelkreis kann beispielsweise ein Antriebs-Schlupf-Regelsystem, ein Anti-Blockier-System, ein Brems-Assistenten-System oder ein Fahrdynamik-Regelsystem umfassen. Das Drehmoment bewirkt vorzugsweise einen Kraftaufbau in Längsrichtung eines oder mehrerer Räder, da typischerweise in Querrichtung keine aktive Momentenbeeinflussung stattfindet. Das Drehmoment kann beispielsweise ein Beschleunigungs- oder ein Verzögerungsmoment sein. Der resultierende Längskraftaufbau erfolgt beispielsweise in Verzögerungs- oder Beschleunigungsrichtung des Fahrzeuges und kann das längs- und/oder querdynamische Verhalten beeinflussen.

Bei der für ein Drehmoment charakteristischen Größe handelt es sich um eine Größe, die mit einem Drehmoment in einer bestimmten Zusammenhang steht, insbesondere in einem linearen Zusammenhang. Bei der Größe kann es sich beispielsweise um eine Leistungsangabe, eine Kraftangabe oder um eine Beschleunigungsangabe handeln. Sämtliche Aussagen in der Anmeldung zum Drehmoment gelten also in gleicher Weise auch für eine derartige charakteristische Größe.

Gemäß dem Verfahren wird ein Reibwert ermittelt. Zur Ermittlung des Reibwerts kann eine zusätzliche Sensorik zur Ermittlung des Reibwerts. verwendet werden. Vorzugsweise wird der Reibwert über fahrzeuginterne Größen geschätzt. Die Schätzung eines Reibwerts über fahrzeuginterne Größen ist in dem Fachbuch "Verbesserungspotenzial von Stabilisierungssystem im Pkw durch eine Reibwertsensorik", Ingo Weber, Fortschr.-Ber. \/DI Reihe 12 Nr. 592, VDI-Verlage 2005 in Kapitel 2.3.1. Die Schätzung des Reibwerts über fahrzeuginterne Größen kann außerdem über zusätzliche Sensorik (z.B. im Reifen integriert oder kamerabasiert) gestützt werden. So kann beispielsweise über einen Sensor im Reifen oder über das Kamerabild der geschätzte Reibwert plausibilisiert werden.

Bei dem Reibwert kann es sich beispielsweise um einen Reibwert eines Reifens, einer Fahrzeugachse oder um einen Reibwert des gesamten Fahrzeugs handeln.

In Abhängigkeit des Reibwerts wird ein Grenzwert für das Drehmoment oder die hierfür charakteristische Größe bestimmt. Dieser Grenzwert kann sich beispielsweise an dem von dem Reibwert abhängigen Momenten-Radius eines Kammschen Reibkreises orientieren, insbesondere etwas größer als dieser Momenten-Radius sein. Das Drehmoments oder die hierfür charakteristische Größe wird auf den so ermittelten Grenzwert begrenzt.

Die Begrenzung durch den Grenzwert erfolgt erfindungsgemäß nach oben.

Eine Begrenzung des Schleppmoments durch den Grenzwert nach unten wäre beispielsweise bei einer Motor-Schieppmoment-Regelung sinnvoll, bei welcher kurzfristig das negative Drehmoment in Beschleunigungsrichtung erhöht wird und somit das Schleppmoment verringert wird, um das Fahrzeug stabil zu halten. Statt bei einer Motor-Schleppmoment-Regelung könnte ein Verfahren zur Begrenzung des Schleppmoment auch bei einer Antrieb-Schleppmoment-Regelung eines Hybrid-Fahrzeugs mit Rekuperation verwendet werden, bei welchem im Schubbetrieb das Rekuperationsmoment der elektrische Maschine gesteuert wird.

Durch die der eigentlichen Regelung vorgelagerte Bestimmung eines Grenzwerts für die Regelung kann das Drehmoment (bzw. die dafür charakteristische Größe) auf einen der Fahrsituation adäquaten Wert begrenzt werden, so dass der Eingriff des Regelsystems in das Fahrverhalten des Fahrzeugs deutlich abgeschwächt wird. Dies führt zu einem reduzierten Belastungsprofil von Bordnetz und Komponenten sowie zur Verbesserung des Kornforts in der Fahrerwahrnehmung.

Bei dem erfindungsgemäßen Verfahren handelt es sich also gewissermaßen um eine dem Regelkreis vorgelagerte Vorsteuerung oder Bereichsvorkonditionierung. Diese Vorsteuerung bestimmt aber im Unterschied zu einer klassischen Vorsteuerung einen Grenzwert innerhalb des Regelkreises, beispielsweise für eine Stellgröße des Regelkreises oder für eine Größe innerhalb der Regelstrecke (insbesondere innerhalb der Antriebs- oder Bremssteuerung), anstatt die Stellgröße des Regelkreises direkt mit einem Wert zu beaufschlagen. Erfindungsgemäß bestimmt das Verfahren einen Grenzwert für das Übertragungsverhalten (und optional für die Übertragungsdynamik) innerhalb Regelstrecke. Erfindungsgemäß begrenzt die Vorsteuerung durch im Wesentlichen regelkreisunabhängige Beeinflussung der Regelstrecke bzw. des Übertragungsverhaltens der Regelstrecke die auftretende Regeldifferenz beispielsweise im Absolutwert oder im zeitlichen Verlauf, die nachgelagerte Regelung wird dadurch abgeschwächt oder die Anregelschwelle wird nicht erreicht.

Vorzugsweise wird der Reibwert bei Detektion des Erreichens einer Stabilitätsgrenze oder bei Regelaktivität (die ja typischerweise bei Erreichen der Stabilitätsgrenze stattfindet) ermittelt. Das Erreichen einer Stabilitätsgrenze oder Regelaktivität kann durch Auswertung eines Schlupf-Signals erfolgen oder durch Auswertung eines Gierraten-Signals erkannt werden. Beispielsweise kann festgestellt werden, dass ein Schlupf eine bestimmte Grenze überschreitet (also ein bestimmter Überschlupf vorliegt) und/oder eine Gierrate eine bestimmte Grenze überschreitet (beispielweise wenn die Gierrate eine sogenannte Ackermann-Gierrate nach unten oder oben überschreitet). Es kann auch hierzu ein beliebiges Regel-Signal (beispielsweise ein binäres Digitalsignal) auswertet werden, welches eine Regel-Aktivität anzeigt.

Bei Erreichen der Stabilitätsgrenze, d. h. der Traktionsgrenze, können besonders gut Rückschlüsse auf den Reibwert gezogen werden, da dann der Kammsche Haftkreis geschnitten wird und die maximale Haftreibungskraft erreicht wird.

Der Grenzwert wird in diesem Fall dann so gewählt, dass die detektierte Stabilitätsgrenze vom Regelsystem durchschritten werden kann. Dies ermöglicht eine Aktivierung der Regelung (die typischerweise an der Stabilitätsgrenze aktiviert wird) trotz Begrenzung auf den Grenzwert. Wenn der Grenzwert vom Betrag her so gewählt würde, dass die detektierte Stabilitätsgrenze nicht mehr durchlaufen werden könnte, könnte das Regelsystem später nicht mehr aktiviert werden. Vorzugsweise wird bei erneutem Detektieren des Erreichens einer Stabilitätsgrenze oder der Aktivität des Regelkreises der Reibwert erneut ermittelt. Dies ermöglicht es unter anderem, den ermittelten Reibwert nach unten anzupassen, wenn sich beispielsweise die Beschaffenheit der Fahrbahn ändert. Wenn nämlich erneut die Traktionsgrenze erreicht wird, kann sich der tatsächliche Reibwert verringert haben und der ermittelte Reibwert kann dann entsprechend verringert werden.

Vorzugsweise wird der ermittelte Reibwert gespeichert. Solange keine Anpassung des ermittelten Reibwerts erfolgt, kann dann das erfindungsgemäße Verfahren unter Verwendung des gespeicherten Reibwerts erfolgen. Die Momenten-Begrenzung zum aktuellen Zeitpunkt erfolgt dann nicht in Abhängigkeit eines aktuellen ist-Reibwerts, sondern in Abhängigkeit eines Reibwert, der aus fahrzeuginternen Größen ermittelt wurde, die einen in der Vergangenheit liegenden Zustand beschreiben.

Gemäß einer vorteilhaften Ausführungsform wird also der ermittelte Reibwert gespeichert. Außerdem wird kontinuierlich ein aktueller Reibwert bestimmt. Der ermittelte Reibwert wird in Abhängigkeit des gespeicherten Reibwerts und des aktuellen Reibwerts aktualisiert. Vorzugsweise entspricht der aktualisierte Reibwert bei Detektion des Erreichens einer Stabilitätsgrenze oder bei Stattfinden einer Aktivität des Regelsystems dem aktuellen Reibwert. Hierdurch kann der ermittelte Reibwert verringert werden (das Verfahren kann so auf einen geringeren Wert "herunterlernen"). Falls die Traktionsgrenze nicht erreicht wurde bzw. keine Aktivität des Regelsystems stattfindet, entspricht der aktualisierte Reibwert dem Maximum aus dem aktuellen Reibwert und dem gespeicherten Reibwert. Wenn der aktuell bestimmte Reibwert also über dem gespeicherten Reibwert liegt, kann der Reibwert also vergrößert werden (das Verfahren kann so auf einen höheren Reibwert "hochlernen").

Vorzugsweise wird bei dem Verfahren der Reibwert in Abhängigkeit eines Drehmoments oder einer hierfür charakteristischen Größe bestimmt, insbesondere ein Drehmoment oder eine charakteristische Größe bei Erreichen einer Traktionsgrenze oder Regelaktivität. Hierbei handelt es sich beispielsweise um ein Radmoment.

Wie vorstehend ausgeführt, sollte bei der Bestimmung des Grenzwerts berücksichtigt werden, dass dem Regelkreis weiterhin ein Durchlaufen der vorher detektieren Stabilitätsgrenze möglich ist. Dazu sollte der Betrag des Grenzwerts pro Rad vorzugsweise größer als der Betrag des Drehmoments pro Rad sein, welches zur Bestimmung des Reibwerts verwendet wird.

Gemäß einer bevorzugten Ausführungsform wird zum Bestimmen des Grenzwerts, zunächst ein maximales Drehmoment oder eine hierfür charakteristische Größe in Abhängigkeit des ermittelten Reibwerts bestimmt. In Abhängigkeit dieses maximalen Betrags wird der Grenzwert bestimmt, wobei der Grenzwert den maximalen Betrag um ein bestimmtes Maß überschreitet, beispielsweise um 5% bis 15%, insbesondere um 10 %. Dabei sollte der Grenzwert vorzugsweise aber mindestens 150-750 Nm (radbezogenes Achsmoment, d. h. hinter dem Differenzial), beispielsweise 250 nM oder 500 Nm über dem maximalen Betrag liegen. Der Grenzwert wird je nach Fahrzeug und Regelsystem beispielsweise um 10% aber mindestens um 250Nm radbezogenes Achsmoment über dem maximalen Betrag appliziert.

Vorzugsweise entspricht der maximale Betrag dem maximalen Betrag eines Moments, das einen Kraftaufbau in Längsrichtung eines oder mehrerer Räder wirkt, also eines Radmomentes oder der Summe von mehreren Radmomenten in Umfangsrichtung. Hierbei wird der maximale Betrag des Moments in Abhängigkeit des ermittelten Reibwerts und in Abhängigkeit einer Querbeschleunigung geschätzt. Dies wird später anhand eines Ausführungsbeispiels genauer erläutert.

Gemäß einer bevorzugten Ausführungsform des Verfahrens wird ferner eine Radaufstandskraft oder eine dafür charakteristische Größe bestimmt und der Reibwert wird in Abhängigkeit der Radaufstandskraft oder der hierfür charakteristischen Größe bestimmt.

Weitere vorteilhafte Ausführungsformen des erfindungsgemäßen Verfahrens sind in den Unteransprüchen angegeben.

Ein weiterer Aspekt der Erfindung ist auf eine Vorrichtung zum Bestimmen eines Grenzwerts für ein Drehmoment (oder eine hierfür charakteristische Größe) eines zur Stabilisierung eines Fahrzeugs dienenden Regelkreises gemäß dem unabhängigen Anspruch 14 gerichtet.

Die Vorrichtung umfasst Mittel zum Ermitteln eines Reibwerts. Außerdem sind Mittel zum Bestimmen eines Grenzwertes für das Drehmoment (bzw. die hierfür charakteristische Größe) in Abhängigkeit des ermittelten Reibwerts vorgesehen. Diese Mittel arbeiten wie vorstehend beschrieben.

Die vorstehenden Ausführungen zum erfindungsgemäßen Verfahren nach dem ersten Aspekt der Erfindung gelten in entsprechender Weise auch für die erfindungsgemäße Vorrichtung.

Die Erfindung wird nachfolgend unter Zuhilfenahme auf die beigefügten Zeichnungen anhand eines Ausführungsbeispiels beschrieben. In diesen zeigen:

Fig. 1    ein vereinfachtes Beispiel eines Regelkreises eines Kraftfahrzeugs, welcher zur Stabilisierung eines Kraftfahrzeugs dient;

Fig. 2    ein Ausführungsbeispiel für Verfahrensschritte zur Bestimmung eines Grenzwerts;

Fig. 3    ein Beispiel für den Kammschen Kreis; und

Fig. 4    einen beispielhaften Verlauf eines Moments über der Zeit.

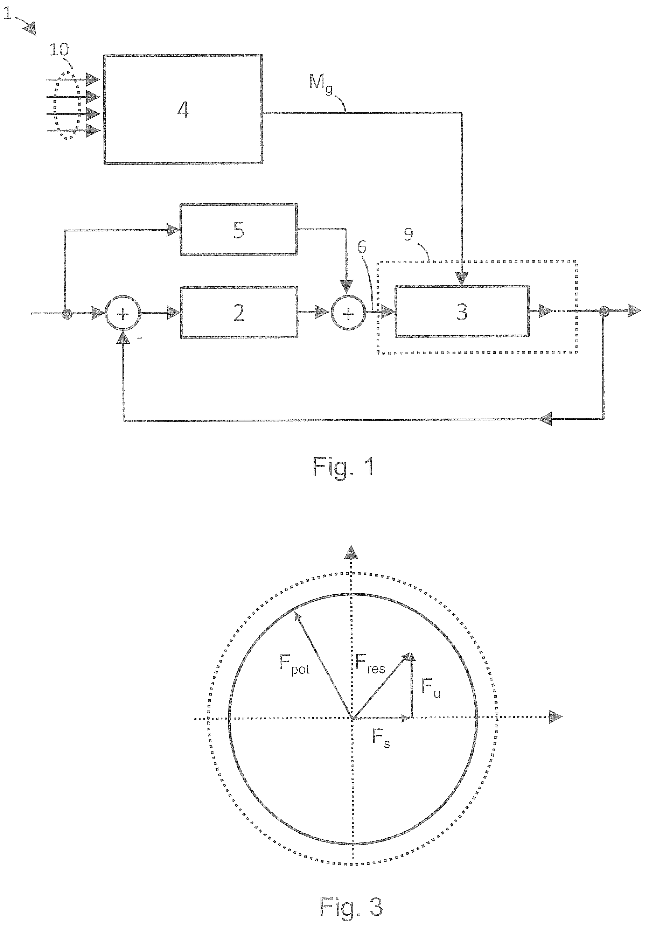

Fig. 1 zeigt ein vereinfachtes Beispiel eines Regelkreises 1 eines Kraftfahrzeugs, welcher zur Stabilisierung eines Kraftfahrzeugs dient.

Derartige Regelkreise 1 stabilisieren das Fahrzeug, wenn es im Grenzbereich gefahren wird. Beispielsweise wird bei einem Antriebs-Schlupf-Regelsystem dafür gesorgt, dass bei Beschleunigung die Räder nicht durchdrehen. Bei einem Antiblockiersystem werden durch den Stelleingriff 6 die Bremsen des Fahrzeugs gelöst, wenn das Fahrzeug beim Bremsen die Bodenhaftung verliert. Bei einem Fahrdynamik-Regelsystem werden beispielsweise mit dem Stelleingriff 6 gezielt einzelne Räder abgebremst, um ein Schleudern des Fahrzeugs zu vermeiden. Die Erfindung ist prinzipiell auf alle Regelkreise zur Stabilisierung des Fahrzeuges wie beispielsweise auch die Motor-Schleppmoment-Regelung anwendbar.

Der Regelkreis umfasst einen Regler 2 sowie eine Regelstrecke 9, welche beispielsweise eine Motor- und/oder Bremssteuerung 3 umfasst. Diese Motor- und/oder Bremssteuerung 3 arbeitet vorzugsweise mit einer Momentenstruktur. Mit dem Regelkreis 1 kann beispielsweise eine von einem Fahrer abrufbare Antriebs- und/oder Bremsleistung durch einen Stelleingriff 6 auf die Motor- und/oder Bremssteuerung 3 als Teil der Regelstrecke 9 des Fahrzeugs eingestellt werden. Bei einem Antriebs-Schlupf-Regelkreis wird beispielsweise der Schlupf als Regelgröße geregelt.

Optional umfasst das Regelsystem 2 neben der rückgekoppelten Regelungsschleife ferner eine Vorsteuerung 5. Diese Vorsteuerung 5 beaufschlagt die Stellgröße des Regelkreises mit einem Wert, der unabhängig von dem Zustand der Regelstrecke ist.

Ferner, ist eine erfindungsgemäße Vorrichtung 4 zum Bestimmen eines Grenzwerts $M_g$ für das Antriebs- und/oder Bremsmoment vorgesehen. Außerdem kann ein Grenzwert für die Momentenänderung pro Zeiteinheit oder für die Beschleunigungsänderung pro Zeiteinheit von der Vorrichtung 4 bestimmt werden. Die Vorrichtung 4 dient durch Bestimmung des Grenzwerts als Momenten-Vorkonditionierung, die dem eigentlichen Regelsystem vorgelagert ist.

Die Vorrichtung 4 schätzt anhand von fahrzeuginternen Größen 10 einen Reibwert (d. h. einen Reibungskoeffizienten). Der Reibwert kann einerseits zu Bestimmung eines Grenzwerts $M_g$ für das Moment als auch zur Bestimmung der Grenze für die Momentenänderung verwendet werden. Der Grenzwert für die Momentenänderung ist von dem geschätzten Reibwert abhängig und nimmt insbesondere mit Reduktion des Reibwerts ab (d. h. bei kleinem Reibwert und damit geringer Haftreibung sollte die maximal erlaubte Momentenänderung geringer sein als bei einem höheren Reibwert).

Die Vorrichtung 4 bestimmt den Reibwert beispielsweise in Abhängigkeit einer Längsbeschleunigung $a_x$, einer Querbeschleunigung $a_y$ und eines Momentssignals $M_{r,dyn}$. Die Schätzung wird dabei beispielsweise anhand eines Schlupf-Signals s, eines Gierraten-Signals s und/oder eines Regelungssignals r, das die Aktivität des Regelkreises angibt, gesteuert.

In der Vorrichtung 4 wird ein Grenzwert $M_g$ für ein Drehmoment in Abhängigkeit des geschätzten Reibwerts bestimmt. Anhand des Grenzwerts $M_g$ kann dann ein Drehmoment im Regelkreis 1, beispielsweise in der Motor- und/oder Bremssteuerung 3, begrenzt werden. Durch die der eigentlichen Regelung vorgelagerte Bestimmung eines Grenzwerts $M_g$ bleibt das Drehmoment auf einen der Fahrsituation adäquaten Wert begrenzt, so dass der Eingriff des Regelsystems in das Fahrverhalten des Fahrzeugs deutlich abgeschwächt wird.

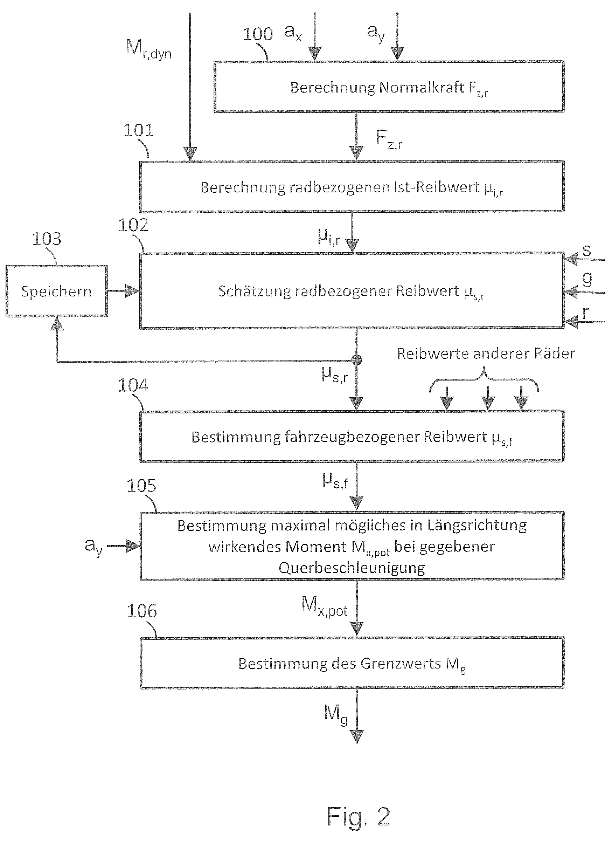

Fig. 2 zeigt ein Ausführungsbeispiel für die in der Vorrichtung 4 ablaufenden Verfahrensschritte zur Bestimmung des Grenzwerts $M_g$. Zunächst wird ein Reibwert über fahrzeuginterne Größen geschätzt. Die Schätzung eines Reibwerts über fahrzeuginterne Größen ist in dem Fachbuch "Verbesserungspotenzial von Stabilisierungssystem im Pkw durch eine Reibwertsensorik", Ingo Weber, Fortschr.-Ber. VDI Reihe 12 Nr. 592, VDI-Verlage 2005 in Kapitel 2.3.1 beschrieben. Die dort gemachten Ausführungen zur Schätzung eines Reibwerts werden hiermit durch Bezugnahme in den Offenbarungsgehalt der Anmeldung aufgenommen. Die Schätzung des Reibwerts basiert zum Teil auf den in dem vorstehend genannten Fachbuch gemachten Ausführungen.

Zunächst erfolgt eine radbezogene Schätzung des Reibwerts. Die radbezogene Schätzung ist nicht zwingend, stattdessen könnten die nachfolgenden Rechenschritte auch direkt für eine Achse oder für das gesamte Fahrzeug durchgeführt werden.

Zur Schätzung des Reibwerts wird in Schritt 100 eine Normalkraft $F_{z,r}$ (Radaufstandskraft) für das jeweilige Rad in Abhängigkeit der fahrzeugbezogenen Längsbeschleunigung $a_x$ und der Querbeschleunigung $a_y$ bestimmt. Die Werte für $a_x$ und $a_y$ können mit Sensoren bestimmt werden. Diese Normalkraft berücksichtigt vorzugsweise zwei Anteile: die statische Gewichtsverteilung und die dynamische Gewichtsverteilung aufgrund der Längsbeschleunigung $a_x$ und der Querbeschleunigung $a_y$. Anhand der Normalkraft $F_{z,r}$ sowie eines resultierenden dynamischen Drehmoments $M_{r,dyn}$ wird in Schritt 101 ein Ist-Wert eines radbezogenen Reibwerts $\mu_{i,r}$ berechnet. Das dynamische resultierende Drehmoment $M_{r,dyn}$ umfasst dabei vorzugsweise drei Anteile: ein Antriebsmoment, ein Bremsmoment sowie ein Trägheitsmoment. Der radbezogene Ist-Reibwert $\mu_{i,r}$ wird beispielsweise in Abhängigkeit des Radhalbmessers r anhand der folgenden Gleichung bestimmt:

$$\mu_{i,r} = \frac{M_{r,dyn}}{r} \cdot \frac{1}{F_{z,r}}$$

Bei dem Radhalbmesser r handelt es sich vorzugsweise um einen dynamischen Radhalbmesser.

In Schritt 102 wird ein radbezogener Reibwert $\mu_{s,r}$ geschätzt.

Der radbezogene Reibwert $\mu_{s,r}$ wird bei Erreichen einer Stabilitätsgrenze (was typischerweise mit einer Aktivität des Regelsystems einhergeht) festgesetzt, indem der Schätzwert $\mu_{s,r}$ mit dem aktuellen Ist-Reibwert $\mu_{i,r}$ abgeschätzt wird, d. h.:

$$\mu_{s,r} = \mu_{i,r} \quad ,$$

bei Erreichen der Stabilitätsgrenze Bei Erreichen der Stabilitätsgrenze wird der Schätzwert $\mu_{s,r}$ also in Abhängigkeit der dann aktuellen fahrzeuginternen Größen $M_{r,dyn}$ und $F_{z,r}$ (oder $\mu_{i,r}$, welches sich aus $M_{r,dyn}$ und $F_{z,r}$ bestimmt) ermittelt. Der geschätzte Reibwert $\mu_{s,r}$ wird gespeichert (s. Schritt 103).

Die Stabilitätsgrenze ergibt sich aus dem Kammschen Kreis (oder bei nichtidealisierten Bedingungen: Ellipse). Fig. 3 zeigt einen idealisierten Kammschen Kreis. Der Radius des Kammschen Kreises entspricht der zur Verfügung stehenden maximalen Haftreibungs-Gesamtkraft $F_{pot}$, die das Rad auf die Fahrbahn übertragen kann. Bei der Stabilitätsgrenze geht die Haftreibung typischerweise in Gleitreibung über. Diese Kraft $F_{pot}$ ist abhängig vom Reibwert $\mu$ des Rads und der Normalkraft $F_z$ auf das Rad (Belastung des Rads):

$$F_{pot} = \mu_r \cdot F_z$$

Gemäß diesem Modell liegt Stabilität vor, wenn die resultierende Kraft $F_{res}$ aus Seitenführungskraft $F_s$ in Querrichtung und Bremskraft bzw. Vortriebskraft $F_u$ in Längskraft innerhalb des Kammschen Kreises liegt. Der Kreis markiert die Stabilitätsgrenze. Der Kammsche Kreis kann statt als Kraftkreis in entsprechender Weise als Reibwert-Kreis oder als Drehmoment-Kreis dargestellt werden, wenn die Kraft durch die Normalkraft dividiert wird bzw. mit dem dynamischen Radhalbdurchmesser multipliziert wird. Die entsprechende Gleichung des Kammschen Kreises für das Drehmoment lautet also:

$$M_{pot} = \mu_r \cdot F_z \cdot r$$

Wenn also die Stabilitätsgrenze erreicht wird, lässt sich der Reibwert $\mu_{s,r}$ durch die Gleichung

$$\mu_{i,r} = \frac{M_{r,dyn}}{r} \cdot \frac{1}{F_{z,r}}$$

gut abschätzen, wobei sich diese Gleichung durch Umformung der vorstehenden Gleichung für das Moment ergibt. Bei Erreichen der Stabilitätsgrenze gibt das Moment $M_{r,dyn}$ den Momenten-Radius des Kammschen Kreises an.

Das Erreichen der Stabilitätsgrenze kann durch verschiedene Kriterien detektiert werden. Das Erreichen einer Stabilitätsgrenze kann beispielsweise durch Auswertung eines Schlupf-Signals s erfolgen. Wenn sich nämlich die ausgenutzte Radgesamtkraft dem Grenzwert annähert, wächst der Schlupf. Überschreitet der Schlupfs eine bestimmte Grenze (d. h. liegt ein gewisser "Überschlupf" vor), kann dies also als ein Indiz für das Erreichen der Stabilitätsgrenze gewertet werden. Das Erreichen der Stabilitätsgrenze kann auch durch Auswertung eines Gierraten-Signals g erkannt werden. Beispielsweise kann dies dadurch erkannt werden, dass die Gierrate eine eine sogenannte Ackermann-Gierrate überschreitet oder unterschreitet. Es kann auch ein beliebiges Regel-Signal (beispielsweise ein binäres Digitalsignal) ausgewertet werden, welches eine Regel-Aktivität anzeigt und dabei auf das Erreichen der Stabilitätsgrenze schließen lässt. Je nachdem wie das Erreichen der Stabilitätsgrenze detektiert wurde (ob über das Schlupf-Signal s oder das Gierraten-Signal) wird vorzugsweise entweder der Längsreibwert oder der Querreibwert bestimmt und als Schätzwert für den Reibwert abgespeichert. Typischerweise liegt eine gegenseitige Abhängigkeit zwischen dem Längs- und Querreibwert vor. Je nach Reifentyp, Reifenprofil, Fahrwerkskinematik und Belastungsfall können Längs- und Querreibwert betraglich identisch sein (Reibwertkreis) oder in vektorieller Addition eine Ellipsenform beschreiben (Reibwertellipse). Üblicherweise kann der Reifen in Längsrichtung höhere Reibwerte übertragen als in Querrichtung ($\mu_x$,max $\geq \mu_y$,max). Der Schätzwert berücksichtigt vorzugsweise sowohl die gegenseitige Abhängigkeit als auch eine mögliche Ellipsenexzentrität.

Falls die Stabilitätsgrenze nicht erreicht wurde bzw. keine Aktivität des Regelsystems stattfindet, wird der radbezogene Reibwert $\mu_{s,r}$ aus dem Maximum des aktuellen Ist-Reibwerts $\mu_{i,r}$ und des gespeicherten Schätzwerts $\mu_{s,r}$ ermittelt, d. h.:

$$\mu_{s,r} = \max\left(\mu_{i,r}, \mu_{s,r}\right)$$

Zur Initialisierung des Systems bei Motorstart kann ein Wert $\mu_{s,r}$ vorgegeben werden.

Wenn der aktuell bestimmte Ist-Reibwert $\mu_{i,r}$ also über dem gespeicherten Reibwert $\mu_{s,r}$ liegt, wird der geschätzte Reibwert $\mu_{s,r}$ entsprechend dem aktuell bestimmten Ist-Reibwert $\mu_{i,r}$ vergrößert (das Verfahren kann so auf einen höheren Reibwert "hochlernen"). Umgekehrt ermöglicht die Schätzung des Reibwerts $\mu_{s,r}$ gemäß $\mu_{s,r} = \mu_{i,r}$ bei Erreichen der Stabilitätsgrenze eine Verringerung des geschätzten Reibwert $\mu_{s,r}$ (das Verfahren kann so auf einen geringeren Schätzwert $\mu_{s,r}$ "herunterlernen").

Vorstehend wurde eine Schätzung des Reibwerts $\mu_{s,r}$ für ein Rad erläutert. Auf die gleiche Weise können die Reibwerte für die anderen Räder geschätzt werden. Aus den radbezogenen Reibwerten kann in Abhängigkeit der Antriebsart (Heckantrieb, Frontantrieb, Allradantrieb) ein fahrzeugbezogener (oder achsbezogner) Reibwert $\mu_{s,f}$ bestimmt werden (s. Schritt 104). Dies ist dem vorstehend genannten Fachbuch "Verbesserungspotenzial von Stabilisierungssystem im Pkw durch eine Reibwertsensorik" beschrieben. Durch Verwendung eines fahrzeug- oder achsbezogenen Reibwerts $\mu_{s,f}$ können die nachfolgenden Rechenschritte gemeinsam für das Fahrzeug oder die Achse durchgeführt werden. Alternativ ist es natürlich auch möglich, die nachfolgenden Rechenschritte weiterhin radbezogen durchzuführen.

Bei Kenntnis eines geschätzten Reibwert $\mu$ lässt sich nun beispielsweise über die vom Kammschen Kreis bekannte Beziehung

$$M_{pot} = \mu \cdot F_z \cdot r$$

ein maximal mögliches Moment $M_{pot}$ schätzen; in diesem Fall entspricht das maximal mögliche Moment also dem Momenten-Radius des Kammschen Kreises. Zusätzlich kann das Moment $M_{pot}$ noch um ein zusätzliches Maß $\Delta M$ vergrößert werden, um den Grenzwert zu bestimmen. In diesem Fall wird der Momenten-Radius also vergrößert. Dies ist in Fig. 3 durch den gepunktet dargestellten Kreis mit dem vergrößerten Radius angedeutet.

Bei dem in Fig. 2 dargestellten Verfahren wird ein maximal mögliches Moment in Längsrichtung geschätzt, wodurch die Berechnung leicht modifiziert wird.

In Schritt 105 wird nämlich aus dem geschätzten Reibwert $\mu_{s,f}$ und der aktuellen Querbeschleunigung $a_y$ das maximal mögliche geschätzte Längsmoment $M_{x,pot}$ berechnet, welches bei gegebener Querbeschleunigung und geschätztem Reibwert wahrscheinlich absetzbar ist. Es wird hier deswegen auf das Längsmoment abgestellt, da die Motor- und/oder Bremssteuerung 3 typischerweise das Längsmoment des Fahrzeugs (und nicht das Quermoment, dessen Steuerung dem Fahrer vorbehalten ist) steuert.

Wie in dem vorstehend genannten Fachbuch auf Seite 28 beschrieben ist, gilt für den fahrzeugbezogenen Reibwert und die Längsbeschleunigung $a_x$ sowie die Querbeschleunigung $a_y$ folgender Zusammenhang:

$$\mu_f = \sqrt{\left(\frac{a_x}{g}\right)^2 + \left(\frac{a_y}{g}\right)^2}$$

Diese Beziehung lässt sich zur Schätzung des Längsbeschleunigungspotentials $a_{x,max}$ (d.h. der maximal möglichen Längsbeschleunigung) bei gegebener Querbeschleunigung $a_y$ und geschätztem Reibwert $\mu_{s,f}$ nutzen:

$$\mu_{f,s} = \sqrt{\left(\frac{a_{x,pot}}{g}\right)^2 + \left(\frac{a_y}{g}\right)^2}$$

Durch Umformung dieser Gleichung kann die potentielle Längsbeschleunigung $a_{x,pot}$ geschätzt werden. Bei Kenntnis der geschätzten potentiellen Längsbeschleunigung $a_{x,pot}$ kann über die Beziehung

$$M_{x,pot} = m \cdot a_{x,pot} \cdot r$$

ein Schätzwert $M_{x,pot}$ für das maximal mögliche in Längsrichtung wirkende Moment berechnet werden, welches bei gegebener Querbeschleunigung und geschätztem Reibwert wahrscheinlich absetzbar ist. Es handelt es sich also um einen Schätzwert für das in Längsrichtung wirkende Moment, bei dem die Stabiliiätsgrenze gerade erreicht wird. Der Schätzwert entspricht also dem Momenten-Radius des Kammschen Kreises in Richtung der Längsbeschleunigung.

Nach der Bestimmung des Radius ($M_{x,pot}$) des Kammschen Kreises wird nun ein im Vergleich dazu vergrößerter Radius ($Mg$) bestimmt, der über der Stabilitätsgrenze liegt.

Dazu wird in Schritt 106 ein Grenzwert $M_g$ für das in Längsrichtung wirkende Moment in Abhängigkeit des geschätzten maximalen Moments $M_{x,pot}$ bestimmt, wobei der Grenzwert $M_g$ um das Maß $\Delta M_x$ größer als das geschätzte maximale Moment $M_{x,pot}$ ist, d. h.:

$$M_g = M_{x,pot} + \Delta M_x$$

Der Grenzwert $M_g$ kann gegenüber $M_{x,pot}$ um einen bestimmten Faktor (z. B. 10 %) oder um einen konstanten Wert (z. B. + 200 Nm) erhöht sein. Vorzugsweise sollte bei der Verwendung eines bestimmten Faktors aber ein minimaler Abstand zwischen $M_g$ und $M_{x,pot}$ eingehalten werden. Die Verwendung eines gegenüber $M_{x,pot}$ erhöhten Grenzwertes $M_g$ ist deswegen sinnvoll, da grundsätzlich immer eine gewisse Fehlschätzung vorliegt und außerdem gewährleistet werden muss, dass weiterhin die Stabilitätsgrenze hin zur Instabilität durchschritten werden kann, da ansonsten die Stabilitätsregelung nicht mehr aktiviert werden kann.

Der Grenzwert $M_g$ dient der Vorkonditionierung hinsichtlich des Bereichs des Drehmoments in Längsrichtung, also der Bereichseinschränkung des Drehmoments. Mit Blick auf Fig. 1 wird durch den Grenzwert $M_g$ beispielsweise das von der Motor- und/oder Bremssteuerung 3 maximal stellbare Moment in Längsrichtung (beispielsweise in Beschleunigungsrichtung oder alternativ in Bremsrichtung) auf den Grenzwert $M_g$ beschränkt.

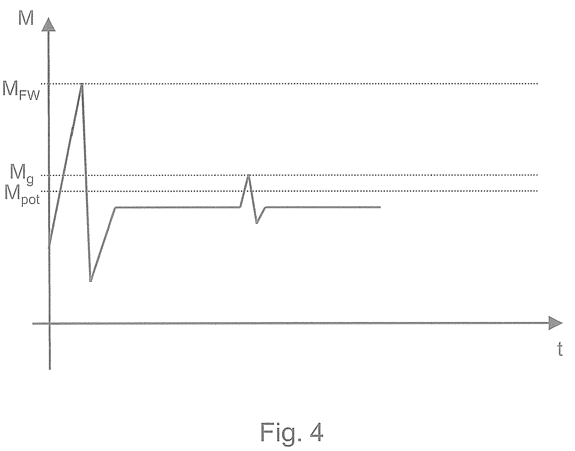

In Fig. 4 ist ein beispielhafter zeitlicher Verlauf eines Drehmoments nach Motorstart mit anfangs noch unwirksamer oder kaum wirksamer Begrenzung und mit wirksamer Begrenzung auf den Grenzwert $M_g$ dargestellt.

Bei Start des Systems (Anfahren bei Motorstart) kann der Wert für den Reibwert nur schwer geschätzt werden, wenn das Erreichen der Stabilitätsgrenze nach Motorstart noch nicht vorgelegen hat.

Das System kann in einer ersten Ausführungsvariante so ausgelegt sein, dass der Grenzwert erst dann aktiviert wird, wenn zum ersten Mal eine verlässliche Schätzung für den Reibwert gefunden wurde (typischerweise durch Erreichen der Stabilitätsgrenze). Erst dann wird ein entsprechender Grenzwert verwendet.

Es kann aber auch vorgesehen werden, dass bei Start des Systems ein Reibwert und damit auch ein Grenzwert oder direkt ein Grenzwert als Startwert verwendet werden. Der voreingestellte Reibwert und/oder der voreingestellte Grenzwert zur Initialisierung des Systems können temperaturabhängig sein; insbesondere mit zunehmender Temperatur zunehmen. Bei einer zweiten Ausführungsvariante kann der Grenzwert bei Start des Systems auf einem sehr hohen Wert festgelegt werden; die Wirkung ist dann ähnlich wie bei der ersten Ausführungsvariante. Es kann dazu beispielsweise zu Beginn ein sehr hoher Wert für den geschätzten Reibwert angenommen werden. Alternativ kann bei einer dritten Ausführungsvariante der Grenzwert bei Start auf einen kleinen Wert voreingestellt werden. Hierzu kann beispielsweise zu Beginn ein kleiner Wert für den geschätzten Reibwert angenommen werden. Beim Anfahren werden der Reibwert und damit auch der Grenzwert "hochgelernt". Hierdurch wird aber die Fahrdynamik beim ersten Anfahren nach Motorstart begrenzt.

Wie in Fig. 4 dargestellt wird bei noch nicht aktivierter Begrenzung (erste Ausführungsvariante oben) oder Voreinstellung eines sehr hohen Grenzwerts (zweite Ausführungsvariante) zunächst versucht, das Drehmoment $M_{FW}$ eines Fahrerwunsches umzusetzen, welches deutlich über der Stabilitätsgrenze $M_{pot}$ liegt. Der Regelkreis reagiert sehr träg; es kommt zu einer großen Fehleramplitude. Bei wirksamer Begrenzung bleibt durch die Vorbegrenzung das Moment auf $M_g$ beschränkt (d. h. die eingestellten Werte für M werden nicht größer als $M_g$). Der Grenzwert $M_g$ liegt etwas über der Stabilitätsgrenze $M_{pot}$ liegt. Die Fehleramplitude ist im Vergleich zu vorher deutlich geringer.

Vorstehend wurde eine Antriebs- und/oder Brems-Leistungs-Vorsteuerung beschrieben, die einen Grenzwerts für Antriebs- bzw. Bremsleistung und/oder Antriebs- bzw. Bremsdynamik bestimmt, und dem bereits vorhandenen Regelkreis vorgelagert ist. Die Vorsteuerung kann hierbei das Gesamtleistungspotential des Antriebs bzw. des Bremssystems auf einen der Fahrsituation angemessenen Wert begrenzen. Die Regelabweichungen werden somit reduziert.

Die vorstehend beschriebene Erfindung ermöglicht es, dass die Fahrstabilität verbessert wird. Das Fahrzeug verhält sich ist in Regelsituationen souveräner. Außerdem verringert sich die Belastung der beteiligten Komponenten. So werden die Bauteile, z. B. Hydraulikkomponenten oder Bremskomponenten wie der Bremsbelag, weniger beansprucht und haben ein besseres Lebensdauerverhalten. Außerdem ermöglicht die Erfindung, die Anzahl der Regeleingriffe auf den Zündpfad zu reduzieren. Daraus ergeben sich eine bessere Leistungseffizienz und ein verbessertes $CO_2$-Verhalten. Außerdem kann das Bordnetzverhalten bezüglich des Energiemanagements verbessert werden (beispielsweise Vermeidung Momentenfreistellung der intelligenten Generatorreglung).

Weitere Aspekte der Erfindung, die bereits in der vorstehend zitierten älteren deutschen Patentanmeldung mit dem Aktenzeichen 10 2009 055 683.4 beschrieben wurden, werden nachfolgend beschrieben:

Ein Aspekt betrifft eine Vorrichtung oder ein Verfahren zum Einstellen einer Antriebs- und/oder Bremsleistung für ein Fahrzeug basierend auf der Stellung wenigstens eines Stellelementes, wobei die Stabilität des Fahrzeugs durch einen Regelkreis regelbar ist und der Regelkreis ab einer Schwellstellung des Stellelementes in das Fahrverhalten des Fahrzeuges eingreift. Hierbei ist die Vorrichtung zum Begrenzen der Antriebs- und/oder Bremsleistung auf einen Wert vorgesehen, der einer Grenzstellung des Stellelementes zwischen der Schwellstellung und einer gewählten Stellung entspricht, wenn die gewählte Stellung größer ist als die Schwellstellung.

Der Schwellwert kann einem Wert der Antriebs- und/oder Bremsleistung entsprechen, bei der eine Haftreibung der Räder des Fahrzeugs in eine Gleitreibung übergeht.

Das Stellelement kann eine Stellung zwischen einer Minimal- und Maximalstellung einnehmen, wobei der Abstand zwischen Minimalstellung und Grenzstellung 10% größer ist als der Abstand zwischen Minimalstellung und Schwellstellung.

Es kann eine Recheneinheit zum Simulieren des Schwellwertes und/oder des Grenzwertes basierend auf einem funktionalen Modell des Fahrzeuges vorgesehen sein.

Die Recheneinheit kann zum Berechnen einer maximal möglichen Quer- und Längsbeschleunigung auf das Fahrzeug basierend auf dem funktionalen Modell des Fahrzeugs und zum Ableiten des Schwellwertes und/oder des Grenzwertes aus der berechneten maximal möglichen Quer- und Längsbeschleunigung vorgesehen sein.

Ferner kann ein Speicherelement zum Speichern des simulierten Schwellwertes und/oder Grenzwertes vorgesehen sein.

Gemäß einem weiteren Aspekt der Erfindung wird vorgeschlagen, durch intelligente funktionale Modellbildung basierend auf vorhandenen Sensorgrößen bzw. auf modellgestützten Kenngrößen auf das situationsbezogene quer- und längsdynamische Beschleunigungspotential zu schließen. Auf Basis der vorliegenden Kenngrößen können für die Ist-Situation die maximal mögliche Antriebsleistungsgrenze und/oder die maximal mögliche Antriebsdynamik ermittelt werden.

**Patentansprüche**

1. Verfahren zum Begrenzen eines Drehmoments oder einer hierfür charakteristischen Größe eines zur Stabilisierung eines Fahrzeugs dienenden Regelkreises (1) nach oben, wobei der Regelkreis einen Regler (2) zur Stabilitätsregelung umfasst, **dadurch gekennzeichnet dass** das Verfahren eine der Stabilitätsregelung über den Regler (2) vorgelagerte Vorsteuerung in der Weise durchführt, dass ein Grenzwert ($M_g$) bestimmt wird und das Drehmoment oder die hierfür charakteristische Größe durch den Grenzwert nach oben begrenzt wird, so dass aufgrund der Vorsteuerung ein im Rahmen einer Stabilitätsregelung durchgeführter Eingriff des Reglers (2) in das Fahrverhalten im Vergleich zu einem Regelkreis ohne Vorsteuerung abgeschwächt wird, umfassend die Schritte:

   - Ermitteln eines Reibwerts ($\mu_{s,r}$; $N_{s,f}$);
   - Bestimmen des Grenzwertes ($M_g$) für das Drehmoment bzw. die hierfür charakteristische Größe in Abhängigkeit des geschätzten Reibwerts ($\mu_{s,r}$; $\mu_{s,f}$), wobei der Grenzwert ($M_g$) so bestimmt wird, dass trotz Begrenzung auf den Grenzwert ($M_g$) die Stabilitätsgrenze durchschritten werden kann und die Stabilitätsregelung über den Regler (2) aktiviert werden kann; und
   - Begrenzen des Drehmoments bzw. der hierfür charakteristischen Größe nach oben auf den Grenzwert ($M_g$).

2. Verfahren nach Anspruch 1, wobei der Reibwert ($\mu_{s,r}$; $\mu_{s,f}$) über eine oder mehrere fahrzeuginterne Größen (10; $M_{r,dyn}$, $a_x$, $a_y$) geschätzt wird.

3. Verfahren nach einem vorhergehenden Ansprüche, wobei

   - der Reibwert ($\mu_{s,r}$; $\mu_{s,f}$) ermittelt wird, wenn das Erreichen einer Stabilitätsgrenze oder eine Aktivität des Regelkreises detektiert wird.

4. Verfahren nach Anspruch 3, wobei bei erneutem Detektieren des Erreichens einer Stabilitätsgrenze oder einer Aktivität des Regelkreises der Reibwert ($\mu_{s,r}$; $\mu_{s,f}$) erneut ermittelt wird und der Grenzwert ($M_g$) in Abhängigkeit des erneut ermittelten Reibwerts erneut bestimmt wird.

5. Verfahren nach einem der vorstehenden Ansprüche 3-4, wobei das Erreichen einer Stabilitätsgrenze oder die Aktivität des Regelkreises in Abhängigkeit

   - eines Schlupf-Signals (s),
   - eines Gierraten-Signals (g) oder
   - in Abhängigkeit eines Regel-Signals (r), welche eine Regel-Aktivität anzeigt,

detektiert wird.

6. Verfahren nach einem der vorhergehenden Ansprüche, wobei der ermittelte Reibwert ($\mu_{s,r}$) gespeichert wird und kontinuierlich ein aktueller Reibwert ($\mu_{s,i}$) bestimmt wird, und ein aktualisierter ermittelter Reibwert ($\mu_{s,r}$)

- bei Detektion des Erreichens einer Stabilitätsgrenze oder der Aktivität des Regelkreis dem aktuellen Reibwert ($\mu_{s,i}$) und
- ansonsten dem Maximum aus dem aktuellen Reibwert ($\mu_{s,i}$) und dem gespeicherten Reibwert ($\mu_{s,r}$)

entspricht.

7. Verfahren nach einem der vorhergehenden Ansprüche, wobei der Reibwert ($\mu_{s,r}$; $\mu_{s,f}$) in Abhängigkeit eines Drehmoment ($M_{r,dyn}$) oder einer hierfür charakteristischen Größe bestimmt wird.

8. Verfahren nach einem der vorhergehenden Ansprüche, wobei der Schritt des Bestimmens eines Grenzwertes ($M_g$) umfasst:

- Schätzen des maximalen Drehmoments ($M_{x,pot}$) oder einer hierfür charakteristischen Größe in Abhängigkeit des ermittelten Reibwerts ($\mu_{s,r}$; $\mu_{s,f}$); und
- Bestimmen des Grenzwerts ($M_g$) in Abhängigkeit des maximalen Drehmoments ($M_{x,pot}$) oder der hierfür charakteristischen Größe, wobei der Grenzwert ($M_g$) größer als dieser maximale Wert ($M_{x,pot}$) ist.

9. Verfahren nach Anspruch 8, wobei das maximale Drehmoment ($M_{x,pot}$) oder die hierfür charakteristische Größe einem maximalen in Längsrichtung wirkenden Moment entspricht und das maximale Moment in Abhängigkeit des ermittelten Reibwerts ($\mu_{s,r}$; $\mu_{s,f}$) und in Abhängigkeit einer Querbeschleunigung ($a_y$) geschätzt wird.

10. Verfahren nach einem der vorhergehenden Ansprüche, wobei der Reibwert ($\mu_{s,r}$; $\mu_{s,f}$) in Abhängigkeit eines Längsbeschleunigungswerts ($a_x$) und eines Querbeschleunigungswerts ($a_y$) bestimmt wird.

11. Verfahren nach einem der vorhergehenden Ansprüche, wobei ein in Längsrichtung wirkendes Drehmoment oder eine hierfür charakteristische Größe durch das Verfahren begrenzt wird.

12. Verfahren nach einem der vorhergehenden Ansprüche, wobei der Regelkreis (1) ein Antriebs-Schlupf-Regelsystem, ein Anti-Blockier-System, ein Brems-Assistenten-System, ein Fahrdynamik-Regelsystem oder eine Antrieb-Schleppmoment-Regelung umfasst.

13. Verfahren nach einem der vorstehenden Ansprüche, wobei ferner noch die zeitliche Änderung des Drehmoments oder der hierfür charakteristischen Größe in Abhängigkeit des geschätzten Reibwerts ($\mu_{s,r}$; $\mu_{s,f}$) begrenzt wird.

14. Regelkreis (1) zur Stabilisierung eines Fahrzeugs, umfassend:

- einen Regler (2) zur Stabilitätsregelung; und
- eine der Stabilitätsregelung über den Regler (2) vorgelagerte Vorsteuerung, welche eingerichtet ist, einen Grenzwert ($M_g$) zu bestimmen und ein Drehmoment oder eine hierfür charakteristische Größe des Regelkreises durch den Grenzwert nach oben zu begrenzen, so dass aufgrund der Vorsteuerung ein im Rahmen einer Stabilitätsregelung durchgeführter Eingriff des Reglers (2) in das Fahrverhalten im Vergleich zu einem Regelkreis ohne Vorsteuerung abgeschwächt wird, wobei die Vorsteuerung eine Vorrichtung (4) zum Bestimmen des Grenzwerts ($M_g$) für das Drehmoment oder die hierfür charakteristische Größe, wobei die Vorrichtung umfasst:

- Mittel zum Ermitteln eines Reibwerts ($\mu_{s,r}$; $\mu_{s,f}$); und
- Mittel zum Bestimmen des Grenzwertes ($M_g$) für das Drehmoment bzw. die hierfür charakteristische Größe in Abhängigkeit des geschätzten Reibwerts ($\mu_{s,r}$; $\mu_{s,f}$), wobei die Mittel eingerichtet sind, den Grenzwert ($M_g$) so zu bestimmen, dass trotz Begrenzung auf den Grenzwert ($M_g$) die Stabilitätsgrenze durchschritten werden kann und die Stabilitätsregelung über den Regler (2) aktiviert werden kann.

**Claims**

1. A method for limiting a torque or a variable which is characteristic thereof, of a control loop (1) used to upwardly stabilise a vehicle, the control loop comprising a controller (2) for stability control, **characterised in that** the method implements a pre-control preceding the stability control by the controller (2) such that a limiting value ($M_g$) is determined and the torque or the variable which is characteristic thereof is limited upwards by the limiting value, so that due to the pre-control, an intervention by the controller (2) into the driving behaviour, carried out as part of a stability control, is reduced in comparison to a control loop without a pre-control, comprising the steps:

- establishing a friction coefficient ($\mu_{s,r}$; $\mu_{s,f}$);
- determining the limiting value ($M_g$) for the torque or the variable which is characteristic thereof, as a function of the estimated friction coefficient ($\mu_{s,r}$; $\mu_{s,f}$), the limiting value ($M_g$) being determined such that in spite of the limit to the limiting value ($M_g$), it is possible to pass through the stability limit, and the stability control by the controller (2) can be activated; and
- upwardly limiting the torque or the variable which is characteristic thereof, to the limiting value ($M_g$).

2. A method according to claim 1, wherein the friction coefficient ($\mu_{s,r}$; $\mu_{s,f}$) is estimated by means of one or more vehicle-internal variables ($10$; $M_{r,dyn}, a_x, a_y$).

3. A method according to either of the preceding claims, wherein

- the friction coefficient ($\mu_{s,r}$; $\mu_{s,f}$) is established when it is detected that a stability limit has been reached or when an activity of the control loop is detected.

4. A method according to claim 3, wherein upon renewed detection of the attainment of a stability limit or of an activity of the control loop, the friction coefficient ($\mu_{s,r}$; $\mu_{s,f}$) is established again and the limiting value ($M_g$) is determined again as a function of the reestablished friction coefficient.

5. A method according to either of the preceding claims 3-4, wherein reaching a stability limit or the activity of the control loop is detected as a function of

- a slip signal (s),
- a yaw rate signal (g), or
- as a function of a control signal (r) indicating a control activity.

6. A method according to any one of the preceding claims, wherein the established friction coefficient ($\mu_{s,r}$) is stored and a current friction coefficient ($u_{s,f}$) is continuously determined, and an updated established friction coefficient ($\mu_{s,r}$)

- corresponds to the current friction coefficient ($\mu_{s,l}$) on detecting the attainment of a stability limit or the activity of the control loop, and
- otherwise corresponds to the maximum of the current friction coefficient ($\mu_{s,l}$) and the stored friction coefficient ($\mu_{s,r}$).

7. A method according to any one of the preceding claims. wherein the friction coefficient ($\mu_{s,r}$; $\mu_{s,l}$) is determined as a function of a torque ($M_{r,dyn}$) or as a function of a variable which is characteristic thereof.

8. A method according to any one of the preceding claims, wherein the step of determining a limiting value ($M_g$) comprises:

estimating the maximum torque ($M_{x,pol}$) or a variable which is characteristic thereof, as a function of the established friction coefficient ($\mu_{s,r}$; $\mu_{s,f}$); and
determining the limiting value ($M_g$) as a function of the maximum torque ($M_{x,pot}$) or of the variable which is characteristic thereof, the limiting value ($M_g$) being greater than this maximum value ($M_{x,pot}$).

9. A method according to claim 8, wherein the maximum torque ($M_{x,pot}$) or the variable which is characteristic thereof, corresponds to a maximum torque acting in the longitudinal direction and the maximum torque is estimated as a function of the established friction coefficient ($\mu_{s,r}$; $\mu_{s,f}$) and as a function of a lateral acceleration ($a_y$).

10. A method according to any one of the preceding claims, wherein the friction coefficient ($\mu_{s,r}$; $\mu_{s,f}$) is determined as a function of a longitudinal acceleration value ($a_x$) and of a lateral acceleration value ($a_y$).

11. A method according to any one of the preceding claims, wherein a torque or a variable which is characteristic thereof, acting in the longitudinal direction, is limited by the method.

12. A method according to any one of the preceding claims, wherein the control loop (1) comprises a traction control system, an anti-lock braking system, a brake assist system, a driving dynamics control system or a driving drag torque control.

13. A method according to any one of the preceding claims, wherein furthermore the temporal change in the torque or in the variable which is characteristic thereof is limited as a function of the estimated friction coefficient ($\mu_{s,r}$; $\mu_{s,f}$).

14. A control loop (1) for stabilising a vehicle, comprising:

- a controller (2) for stability control; and
- a pre-control which precedes the stability control by the controller (2) and which is configured to determine a limiting value ($M_g$) and to upwardly limit a torque or a variable which is characteristic thereof, of the control loop by the limiting value, so that due to the pre-control, an intervention by the controller (2) into the driving behaviour, carried out as part of a stability control, is reduced in comparison to a control loop without a pre-control, wherein the pre-control comprises a device (4) for determining the limiting value ($M_g$) for the torque or for the variable which is characteristic thereof, the device comprising:

means for establishing a friction coefficient ($\mu_{s,r}$; $\mu_{s,r}$); and
means for determining the limiting value ($M_g$) for the torque or for the variable which is characteristic thereof, as a function of the estimated friction coefficient ($\mu_{s,r}$; $\mu_{s,f}$), the means being configured to determine the limiting value ($M_g$) so that in spite of the limit to the limiting value ($M_g$), it is possible to pass through the stability limit, and the stability control by the controller (2) can be activated.

**Revendications**

1. Procédé de limitation vers le haut, d'un couple de rotation ou d'une grandeur caractéristique de celui-ci d'une boucle de régulation (1) servant à stabiliser un véhicule, cette boucle de régulation comprenant un régulateur (2) pour permettre la régulation de la stabilité,
   **caractérisé en ce que**
   le procédé exécute une précommande précédant la régulation de la stabilité par l'intermédiaire du régulateur (2) de façon à déterminer une valeur limite ($M_g$), et à limiter vers le haut le couple de rotation ou la grandeur caractéristique de celui-ci par la valeur limite, de sorte que, sur le fondement de la précommande, une intervention du régulateur (2) sur le comportement de déplacement exercée dans le cadre d'une régulation de la stabilité soit affaiblie par rapport à une boucle de régulation sans précommande, procédé comprenant les étapes suivantes consistant à :

   - évaluer un coefficient de friction ($\mu_{s,ri}$ $\mu_{s,f}$) ;
   - déterminer la valeur limite ($M_g$) du couple de rotation ou de la grandeur caractéristique de celui-ci en fonction du coefficient de friction ($\mu_{s,ri}$ $\mu_{s,f}$) estimé, la valeur limite ($M_g$) étant déterminée de sorte que malgré la limitation à cette valeur limite ($M_g$) la limite de stabilité puisse être franchie et que la régulation de la stabilité par le régulateur (2) puisse être activée, et
   - limiter vers le haut le couple de rotation ou la grandeur caractéristique de celui-ci à la valeur limite ($M_g$).

2. Procédé conforme à la revendication 1,
   selon lequel le coefficient de friction ($\mu_{s,ri}$ $\mu_{s,f}$) est estimé par l'intermédiaire d'une ou de plusieurs grandeur (s) interne (s) du véhicule (10 ; $M_{r,dyn}$, $a_x$, $a_y$).

3. Procédé conforme à l'une des revendications précédentes,
   selon lequel le coefficient de friction ($\mu_{s,ri}$ $\mu_{s,f}$) est évalué lorsque a été détectée l'atteinte d'une limite de stabilité ou une activité de la boucle de régulation.

4. Procédé conforme à la revendication 3,
   selon lequel lors d'une nouvelle détection de l'atteinte d'une limite de stabilité ou d'une activité de la boucle de régulation, le coefficient de friction ($\mu_{s,ri}$ $u_{s,f}$) est à nouveau évalué et la valeur limite ($M_g$) est à nouveau déterminée en fonction du coefficient de friction nouvellement évalué.

5. Procédé conforme à l'une des revendications précédentes 3 et 4,
   selon lequel l'atteinte de la limite de stabilité ou l'activité de la boucle de régulation est détecté en fonction :

   - d'un signal de patinage (s),
   - d'un signal de taux de lacet (g) ou
   - en fonction d'un signal de régulation (r) qui indique une activité de régulation.

6. Procédé conforme à l'une des revendications précédentes 3 et 4,
   selon lequel le coefficient de friction ($\mu_{s,r}$) évalué est enregistré, un coefficient de friction actuel ($\mu_{s,i}$) est déterminé en continu et un coefficient de friction ($\mu_{s,r}$) évalué actualisé ($\mu_{s,r}$) correspond

   - lors de la détection de l'atteinte d'une limite de stabilité ou de l'activité de la boucle de régulation, au coefficient de friction actuel ($\mu_{s,i}$), et
   - sinon au maximum du coefficient de friction actuel ($\mu_{s,i}$) et du coefficient de friction ($\mu_{s,r}$) enregistré.

7. Procédé conforme à l'une des revendications précédentes selon lequel le coefficient de friction ($\mu_{s,ri}$ $\mu_{s,f}$) est déterminé en fonction du couple de rotation ($M_{r,dyn}$) ou d'une grandeur caractéristique de celui-ci.

8. Procédé conforme à l'une des revendications précédentes selon lequel l'étape consistant à déterminer une valeur limite ($M_g$) comprend des étapes consistant à :

   - estimer le couple de rotation maximum ($M_{x, pot}$) ou une grandeur caractéristique de celui-ci en fonction du coefficient de friction ($\mu_{s,ri}$ $\mu_{s,f}$) évalué, et

- déterminer la valeur limite ($M_g$) en fonction de la valeur maximum du couple de rotation ($M_{x,\ pot}$) ou de la grandeur caractéristique de celui-ci, la valeur limite ($M_g$) étant supérieure à cette valeur maximum ($M_{x,\ pot}$).

9. Procédé conforme à la revendication 8, selon lequel la valeur maximum du couple de rotation ($M_{x,\ pot}$) ou de la grandeur caractéristique de celui-ci, correspond à un couple maximum agissant dans la direction longitudinale et le couple maximum est estimé en fonction du coefficient de friction ($\mu_{s,ri}\ \mu_{s,f}$) évalué et en fonction d'une accélération transversale ($a_y$).

10. Procédé conforme à l'une des revendications précédentes selon lequel le coefficient de friction ($\mu_{s,ri}\ \mu_{s,f}$) est déterminé en fonction d'une valeur d'accélération longitudinale ($a_x$) et d'une valeur d'accélération transversale ($a_y$).

11. Procédé conforme à l'une des revendications précédentes, selon lequel le couple de rotation agissant en direction longitudinale ou une grandeur caractéristique de celui-ci est limitée par le procédé.

12. Procédé conforme à l'une des revendications précédentes, selon lequel la boucle de régulation (1) renferme un système de régulation anti-patinage d'entraînement, un système d'antiblocage, un système d'assistance au freinage, un système de régulation de la dynamique du mouvement ou. une régulation du couple de traînée.

13. Procédé conforme à l'une des revendications précédentes, selon lequel, la variation dans le temps du couple de rotation ou de la grandeur caractéristique de celui-ci est en outre limitée en fonction du coefficient de friction ($\mu_{s,ri}\ \mu_{s,f}$) évalué.

14. Boucle de régulation (1) permettant de stabiliser un véhicule comprenant :

 - un régulateur (2) pour effectuer une régulation de la stabilité, et
 - une précommande préalable à la régulation de la stabilité par l'intermédiaire du régulateur (2) qui est réalisée pour permettre de déterminer une valeur limite (Mg) et de limiter vers le haut le couple de rotation ou une grandeur caractéristique de celui-ci de la boucle de régulation à la valeur limite, de sorte que sur le fondement de la précommande, une intervention du régulateur (2) sur le comportement de déplacement exercée dans le cadre d'une régulation de la stabilité soit affaiblie par comparaison avec une boucle de régulation sans précommande, la précommande comprenant un dispositif (4) permettant de déterminer la valeur limite ($M_g$) du couple de rotation, ou la grandeur caractéristique de celui-ci, ce dispositif comprenait :

 - des moyens permettant d'évaluer un coefficient de friction ($\mu_{s,ri}\mu_{s,f}$), et
 - des moyens permettant de déterminer la valeur limite ($M_g$) du couple de rotation ou de la grandeur caractéristique de celui-ci en fonction du coefficient de friction ($\mu_{s,ri}\ \mu_{s,f}$) estimé, ces moyens étant réalisés de maçon à déterminer la valeur limite ($M_g$) de sorte que malgré la limitation à la valeur limite ($M_g$), la limite de stabilité puisse être franchie et que la régulation de la stabilité puisse être activée par le régulateur (2).

Fig. 1

Fig. 3

Fig. 2

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933087 A1
- DE 4430108 A1
- DE 102007051590 A1
- DE 102009055683

**In der Beschreibung aufgeführte Nicht-Patentliteratur**

- Verbesserungspotenzial von Stabilisierungssystem im Pkw durch eine Reibwertsensorik. **INGO WEBER.** Fortschr.-Ber. VDI Reihe. VDI-Verlage, 2005, vol. 12
- Verbesserungspotenzial von Stabilisierungssystem im Pkw durch eine Reibwertsensorik. **INGO WEBER.** Fortschr.-Ber. VDI Reihe. VDI-Verlage, 2005, vol. 12